# EUROPEAN PATENT APPLICATION

(11) **EP 2 159 048 A1**
(43) Date of publication of application: **03.03.2010**
(21) Application number: 08015359.6
(22) Date of filing: 30.08.2008
(51) Int. Cl.: B32B 37/12

(54) **Method of producing a laminate**

(71) Applicant: Mondi AG, 1032 Wien (AT)
(72) Inventor: Maurizio, Gianluca, 55049 Viareggio (LU) (IT); Degroeve, Rene, 2100 Deurne (BE)
(74) Representative: Schneider, Michael

(57) **Abstract**

In a method of producing a laminate (12) the following steps are applied, which are producing the carrier material (11), and laminating onto the produced carrier material (11) inline with the production of the carrier material (11) a substrate carrier (3) that comprises on at least one of its surfaces a layer (4) having adhesive properties such that the adhesive layer (4) is in contact with the carrier material (11) and adheres to the carrier material (11).

## Description

### FIELD OF THE INVENTION

The invention relates to a method of producing a laminate.

### BACKGROUND OF THE INVENTION

A laminate is a material constructed by uniting two or more layers of material together. The process of creating a laminate is lamination, which in common parlance refers to sandwiching something between layers of plastic and sealing them with heat and/or pressure, usually with an adhesive. The materials used in laminates can be the same or different. As an example laminating a tough plastic film between two layers of glass commonly makes vehicle windshields. Plywood is a common example of a laminate using the same material in each layer. Glued and laminated dimensioned timber is used in the construction industry to make wooden beams with sizes larger and stronger than can be obtained from single pieces of wood.

In some applications a base material, the so termed "carrier material", is laminated with another film or foil like material, which is commonly termed "substrate carrier" or "lamination material". The substrate carrier may be a film covered by a seal coating, which in turn of the lamination is brought in contact with the carrier material. With lamination a more durable surface of the carrier material is achieved or the surface of the carrier material is embellished.

In prior art hot lamination and cold lamination processes are commonly used. In both cases wet glue on the lamination material is used to adhere the lamination material on the carrier material. Typically long lime after the production process of the carrier material was finished - so to say off-line or out of line with the process of producing the carrier material - the process of lamination is performed, wherein the lamination material is affixed on the respective side of the carrier material by means of the glue. This is called wet lamination because wet glue is used. In case of hot lamination the glue needs to be heated up on a certain lamination temperature. It has shown that in particular this off-line hot lamination process is relatively inefficient in terms of energy consumption. However, in particular the off-line related handling of the produced carrier material after production was accomplished and before lamination is started is relatively cumbersome, time consuming and therefore also inefficient and requires a significant amount of manpower.

Therefore, it is an object of the present invention to avoid the problems identified in the known method of producing a laminate and to provide an improved method.

### SUMMARY OF THE INVENTION

In order to achieve this object there is provided a method of producing a laminate, the method comprises the steps of producing the carrier material, and laminating onto the produced carrier material inline with the production of the carrier material a substrate carrier that comprises on at least one of its surfaces a layer having adhesive properties, such that the adhesive layer is in contact with the carrier material and adheres to the carrier material.

As the lamination process is now preformed inline with the production process of the carrier material it is guaranteed that the produced carrier material does not have to be stored and handled while waiting for the final lamination process. Consequently the entire manufacturing process of the laminated carrier material - the laminate - is significantly streamlined and more efficient in comparison to the prior art off-line manufacturing process. Hence the manufacturing speed is significantly increased while at the same time intermediate handling activities for handling the carrier material is reduced or even completely avoided before lamination takes place. This in turn opens up a whole new variety of application domains by enriching the carrier material.

In this context the term "inline" means without any intermediate storing of the produced carrier material or only with marginal or negligible intermediate storing of the produced carrier material, e.g. by means of a loop or meander like structures of e.g. a flexible carrier material in the production line.

The invention may be applied in various lamination applications, e.g. in the field of laminating wood plates, metal surfaces or glass and so on. However, in particular the present invention finds its field of application in the domain of laminating plastic sheets that are forming the carrier material. Such plastic sheets may be produced by means of e.g. extrusion of granulates. During extrusion the granulate is transported by means of a screw and due to the friction between particles of the granulate a vast amount of heat is produced that melts the granulate. The melted material is released via a tube from the extrusion machinery and squeezed through a flat die system in order to realize a plate of plastic. This flat plastic structure is typically again heated up in order to de-stress the material forming the plastic sheet.

In the present application the term "plastic sheet" is used to describe all kind of plastic based material, which are materials realizing so-termed "plastics". "Plastics" is the general term for a wide range of synthetic or semi-synthetic polymerization products. They are composed of organic condensation or addition polymers and may contain other substances to improve performance or reduce costs. There are many natural polymers generally considered to be "plastics". Plastics can be formed into many different types of objects, or films, or fibers. Their name is derived from the malleability, or plasticity, of many of them. The "s" in "plastics" is there to distinguish between the polymer and the way a material deforms. For example, aluminum is a ductile material and can undergo "plastic" deformation when the material undergoes stress from a force and results in a strain of which it will not return. "Plastics" refers to the polymer material. The word derives from the Greek 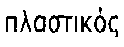 (plastikos), "fit for molding", from 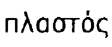 (plastos) "molded"

Plastics can be classified in many ways, but most commonly by their polymer backbone (polyvinyl chloride, polyethylene, polymethyl methacrylate, and other acrylics, silicones, polyurethanes, etc.). Other classifications include thermoplastic, thermoset, elastomer, engineering plastic, addition or condensation or polyaddition (depending on polymerization method used), and glass transition temperature.

Some plastics are partially crystalline and partially amorphous in molecular structure, giving them both a melting point (the temperature at which the attractive intermolecular forces are overcome) and one or more glass transitions (temperatures above which the extent of localized molecular flexibility is substantially increased). So-called semi-crystalline plastics include polyethylene, polypropylene, poly (vinyl chloride), polyamides (nylons), polyesters and some polyurethanes. Many plastics are completely amorphous, such as polystyrene and its copolymers, poly (methyl methacrylate), and all thermosets.
Plastics are polymers: long chains of atoms bonded to one another. Common thermoplastics range from 20,000 to 500,000 in molecular mass, while thermosets are assumed to have infinite molecular weight. These chains are made up of many repeating molecular units, known as "repeat units", derived from "monomers"; each polymer chain will have several 1000's of repeat units. The vast majority of plastics are composed of polymers of carbon and hydrogen alone or with oxygen, nitrogen, chlorine or sulfur in the backbone. (Some of commercial interests are silicon based.) The backbone is that part of the chain on the main "path" linking a large number of repeat units together. To vary the properties of plastics, both the repeat unit with different molecular groups "hanging" or "pendant" from the backbone, (usually they are "hung" as part of the monomers before linking monomers together to form the polymer chain). This customization by repeat unit's molecular structure has allowed plastics to become such an indispensable part of twenty first-century life by fine tuning the properties of the polymer.

According to a preferred embodiment of the invention the plastic sheet has a processing temperature after producing it, wherein the temperature is above room temperature, and the adhesive layer of the substrate carrier is a thermal activate-able layer that is brought in contact with the plastic sheet. The features according to the preferred embodiment of the invention provide the advantage that the thermal activate-able layer is activated by the aid of the processing temperature of the plastic sheet, such that the thermal activate-able layer acts as an adhesive layer to adhere the substrate carrier onto the plastic sheet. Hence, an energy efficient heat activated dry lamination process is realized that utilizes the heat developed during the plastic sheet production process.

In order to achieve energy efficiency in all circumstances the cool down of the produced plastic sheet down to the room temperature should be avoided. The term "room temperature" does not necessary have to indicate a temperature of 20°C but can indicate any other temperature - typically being present in a production hall - below which a produced plastic sheet will naturally not cool down when handled in such an environment. Similar the term "processing temperature" shall not be understood as being limited to the absolute maximum available temperature value just after producing the plastic sheet because the temperature of the plastic sheet will naturally drop while conveying the plastic sheet towards the lamination equipment. Consequently the term "processing temperature" shall be understood as any temperature below the absolute maximum available temperature just after producing the plastic sheet and above the room temperature.

According to a further embodiment of the invention the step of laminating comprises pre-heating of the thermal activate-able layer before bringing the thermal activate-able layer in contact with the plastic sheet. This allows for increased line speed operation because the pre-heated layer of the substrate carrier is already brought into a condition in which the adhesive properties are improved.

In a further embodiment of the invention the step of laminating comprises pre-heating of the plastic sheet on that side of the plastic sheet to which the thermal activate-able layer shall be adhered before bringing the thermal activate-able layer in contact with the plastic sheet. Also this feature serves for increased line speed. But also the inherent adhesive properties of the plastic sheet are activated on a level that improves the adhering of the plastic sheet with the adhesive layer of the substrate. In particular utilizing the already existing processing temperature of the plastic sheet as a starting temperature allows energy efficient operation of the lamination equipment. Adhering may be improved when both materials, which are the adhesive layer and the plastic sheet, are pre-heated. Dependent on the materials used pre-heating of the surface of the plastic sheet may be necessary because some materials my have a relatively high melting point. Heating up to this melting point may improve the adhering of the heat activate-able layer on the surface of the plastic sheet.

Several known pre-heating methods like e.g. a conventional convector heater may perform the pre-heating of the layer of the substrate having adhesive properties or of the plastic sheet. However, according to a particular embodiment of the invention the step of pre-heating is performed by means of hot air blows or infrared irradiation. In particular the application of infrared irradiation has proved to be of particular advantage because its application allows for easy and reliable control of the irradiated power. Hence, adjusting the irradiation power inline with production line speed settings or variations in the line speed or even tuning it dependent on the materials used is efficiently and rapidly realizable.

According to a further aspect of the invention the per-heating is performed such that a surface temperature of the heated material or surface of the material in a range of 50° C to 150° C is achieved. This allows achieving for optimum adhesive properties of the respective pre-heated material and allows taking into account different materials or to adjust or to set an activation depth in the surface of the material to be thermally activated.

In principle the substrate carrier can be any material to which a layer of adhesive material can be applied which in turn allows adhering the substrate carrier to the carrier material. According to a preferred embodiment of the invention the material of the substrate carrier comprises one of the following or is one of the following materials or is a composite of these materials: paper, board, plastic film, non-woven material, woven material, aluminum foil, glass fibers, basalt fibers, polymeric foams. This allows for serving customer's demand or functional requirements to be fulfilled.

In order to embellish the surface of the substrate the substrate carrier comprises a printing, is lacquered or shows a functional coating, which allows for easy adaptation of the finish of the laminated plastic sheet according to customer's demand or functional requirements.

The adhesive layer may be realized by means of a layer of glue, which in one embodiment is activate-able by means heat. However, according to a preferred embodiment of the invention the thermal activate-able layer is made of a thermoplastic layer or of a lacquer coating. This allows to avoid any use of glue and to actively use the intrinsic adhesive properties of the thermoplastic material or of the lacquer itself.

The plastic sheet may be realized by means of various known materials. However, it has proved to be of advantage if the plastic sheet is made of one of the following materials: polyethylene, polypropylene, polyester or any other plastic based material. This allows efficient lamination with the substrate comprising the heat activate-able layer.

According to the preferred embodiment of the invention the step of laminating comprises unwinding the substrate carrier from a reel before activating the thermal activate-able layer. This implementation allows for the efficient and well -controlled activation of those parts of the layer that shall be adhered to the plastic while avoiding any other parts of the layer to be accidentally adhered with the substrate or other parts of the equipment. The process of unwinding further can be easily adapted to the production line speed or variations in the production line speed.

A further aspect of the invention relates to the utilization of a pressure roll lamination system. In a preferred embodiment the step of laminating comprises pressing the substrate carrier onto the plastic sheet by means of said pressure roll laminating system. This allows for proper control of the pressure applied in the lamination process while enabling lamination in a continuous manner.

The inline-lamination can be performed at various speeds provided by the equipment used for laminating. However, performing the step of laminating at the line speed of the produced plastic sheet provides the advantage that unnecessary intermediate storage systems can be entirely avoided because the lamination takes place in a synchronized mode with the extrusion/production of the plastic sheet.

According to the most energy efficient embodiment of the invention the activating of the adhesive properties of the thermal activate-able layer is solely performed by the processing temperature of the plastic sheet. By setting or selecting the processing temperature at the optimum level or by selecting a material of which the material properties match with the existing processing temperature no addition heat sources are required for heat activating of the thermal activate-able layer. Consequently using the existing processing temperature of the plastic sheet only performs lamination. This on one hand significantly improves the energy efficiency of the entire manufacturing process but on the other hand also allows a more simple and cost efficient design of the manufacturing equipment.

Other objects and features of the present invention will become apparent from the following detailed descriptions considered in conjunction with the accompanying drawings. It is to be understood, however, that the drawings are designed solely for the purposes of illustration and not as a definition of the limits of the invention.

### BRIEF DESCRIPTION OF THE DRAWING

In the drawing:

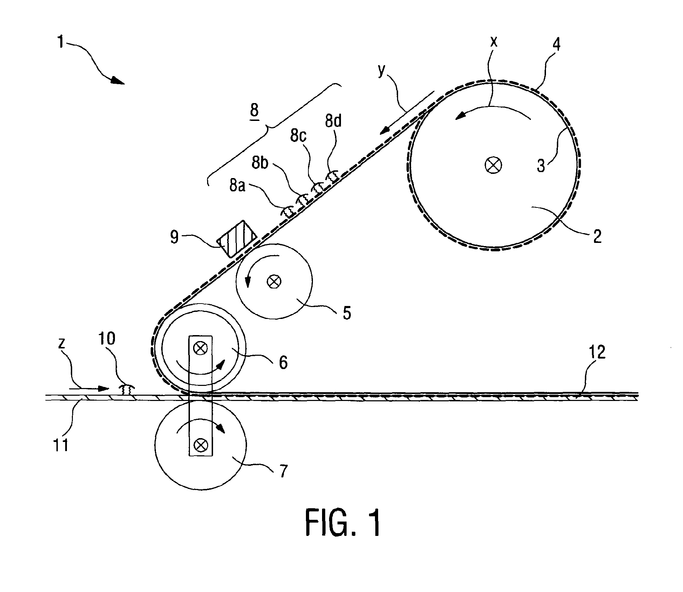

Fig. 1 shows a pressure roll lamination system forming a part of manufacturing equipment for producing a laminate according to the method of the invention.

### DETAILED DESCRIPTION OF EMBODIMENTS

Fig. 1 shows a part of manufacturing equipment for manufacturing a laminated plastic sheet, a so termed laminate. The manufacturing equipment typically comprises of a plastic sheet production equipment, which is not shown in Fig. 1 because it is comprised in the art as such, and a lamination equipment 1, which in the present case is realized as a pressure roll lamination system. The lamination equipment 1 comprises of an unwinder 2, which is designed to carry and unwind a roll of substrate carrier 3. The substrate carrier 3 comprises on at least one of its surfaces - in the present case on its outer side - a thermal activate-able layer having adhesive properties when activated by heat. In the present case the substrate carrier 3 is made of a plastic film, which carries a so-called seal coating 4. In the present case the seal coating 4 realizes the thermal activate-able layer, which is made of a thermoplastic material. It is to mention that a lacquer coating as well may also realize the thermal activate-able layer. The substrate carrier 3 - without limiting effect with regard to other materials - may also be made of the following materials, which are paper, board, non-woven material, woven material or even an aluminium foil.

The unwinder 2 comprises - not explicitly shown in the Fig. 1 - an automatic braking system linked to the line speed changes. It serves for proper and controlled unwinding of the substrate carrier 3 in accordance with the actual line speed.

The lamination equipment 1 further comprises a first roll 5, a second roll 6 and a third roll 7. The first roll 5 is a so-termed "banana" roll, which basically shows a banana like form and serves for avoiding any rumples in the laminate, which may be produced because of tension in the substrate carrier 3. It is to note that also other structures serving this demand may be applied. The second roll 6 is a metal made roll that shows a rubber coating. In the present case the rubber has a hardness of 80 shore, wherein shore is a measure for hardness of surfaces, but it can as well be in the range e.g. between 20 to 80. It allows for compensating for irregularities in the thermal activate-able layer. The third roll 7 is made of steel and realizes together with other installations not explicitly shown in Fig. 1 a hydraulic controlled pressure roll. Together with the second roll 6 it allows for a controlled pressing together of the plastic sheet and the thermal activate-able layer of the substrate carrier 3.

In Fig. 1 an arrow x indicates the rotation direction of the unwinder 2 for winding-off the substrate carrier 3, an arrow y indicates the propagation direction of the substrate carrier 3 and an arrow z indicated the propagation direction of the plastic sheet 11.

The lamination equipment 1 further comprises of a number of first pre-heating units 8, which in the present case are realized by means of infrared light sources. In Fig. 8 four of such infrared light sources 8a to 8d are shown. The function of this first pre-heating unit 8 is pre-heating of the thermal activate-able layer 4 before bringing the thermal activate-able layer 4 in contact with the plastic sheet.

In addition, the lamination equipment 1 comprises a heat sensor 9, which is located downstream in relation to the first pre-heating units 8. The heat sensor 9 is designed to control the heat produced by the first pre-heating units 8 as a function of the line speed. In this context a first pre-heating unit 8 may produce infrared light with reduced intensity in case of a low line speed and infrared light with high intensity in case of high line speed, such that a desired surface temperature of the thermal activate-able layer - the seal coating 4 - is achieved.

The second roll 6 together with the unwinder 2 allows unwinding the substrate carrier 3 and guiding it along the first pre-heating units 8 and the heat sensor 9 and finally brings it in contact with the plastic sheet 11. Before the plastic sheet is brought in contact with the substrate carrier 3 a second pre-heating unit 10 is located upstream to the second roll 6. The function of the second pre-heating unit 10 is pre-heating of the plastic sheet 11 on that side of the plastic sheet 11 to which the thermal activate-able layer of the substrate carrier 3 shall be adhered before bring the thermal activate-able layer in contact with the plastic sheet 11.

Next to the second pre-heating unit 10 the plastic sheet 11 is brought in contact with the thermal activate-able layer of the substrate carrier 3. The second roll 6 and the third roll 7 squeeze the substrate carrier 3 and the plastic sheet 11 together such that the pre-heated substrate carrier 3 - or more precisely the thermal activate-able layer of the substrate carrier 3 - comes in tight contact with the pre-heated side of the plastic sheet 11. Applying the appropriate pressure guaranties that the thermal activate-able layer and the pre-heated plastic sheet 11 adhere together. Adhering the thermal activate-able layer of the substrate carrier 3 together with the plastic sheet 11 creates the laminated plastic sheet 12 or in other words the laminate.

The combination of the plastic sheet production equipment together with the lamination equipment 1 allows performing a method according to the invention. The method according to the invention starts with the step of producing the plastic sheet 11 that, when produced, has a processing temperature above room temperature. Unlike to prior art off-line lamination methods the plastic sheet 11 is not stored intermediately on rolls or the like. In contrast to the prior art off-line method it is directly applied to the lamination equipment 1. At the lamination equipment 1 a further step of the method according to the invention is processed, which is laminating inline after the production of the plastic sheet 11 and before the plastic sheet 11 is cooled down to room temperature the substrate carrier 3 that comprises on one of its sides (surfaces) the thermal activate-able layer. This thermal activate-able layer is pressed onto the surface of the just produced plastic sheet 11, such that the thermal activate-able layer is in contact with the plastic sheet 11 and adheres to it. This creates the laminated plastic sheet 12.

This preferred embodiment of the method according to the invention is of high energy efficiency because it allows utilizing the still present processing temperature of the just produced plastic sheet 11 for - solely or supportively - thermally activating the thermal activate-able layer of the substrate carrier 3, such that the thermal activate-able layer activates its adhesive properties and adheres to that side of the plastic sheet 11 to which it is attached or pressed by means of the second roll 6 and the third roll 7.

According to preferred embodiment of this method the step of laminating comprises pre-heating of the thermal activate-able layer before bringing the thermal activate-able layer in contact with the plastic sheet 11, which is in fact performed by the first pre-heating unit 8. The thermal activate-able layer is typically pre-heated in a temperature range of 50°C to 150°C. In the present case the heat sensor 9 controls the heating of the first pre-heating units 8 such that the surface temperature of the substrate carrier 3 shows the temperature of 100 to 111°C. According to the preferred embodiment of the method according to the invention also the plastic sheet 11 is pre-heated on that side of the plastic sheet 11 to which the thermal activate-able layer shall be adhered before bringing the thermal activate-able layer in contact with the plastic sheet 11. The power of the second pre-heating unit 10 is adjusted such that the surface temperature of that side of the plastic sheet 11 facing towards the thermal activate-able layer is in the range of 50°C to 150°C. In the present case a temperature of approximately 100°C is selected because the material of the plastic sheet is slightly melted on its surface at that temperature. In case of e.g. other materials applied a totally different temperature may be set for achieving the same effect. It can be mentioned that also the second pre-heating unit 10 may be realized by a number of individual units and a further heat sensor may be installed downstream in relation the second pre-heating unit 10 in order to monitor the surface temperature of the plastic sheet 11.

In comparison to a prior art lamination equipment, the energy efficiency of the method according to the invention is significantly improved, because the residual processing temperature of the produced plastic sheet 11 allows significantly reduced energy consumption when heating up the plastic sheet 11 to the desired surface temperature, if at all necessary. In a prior art lamination equipment the plastic sheet 11 requires heating up from room temperature up the desired surface temperature, which is significantly more expensive in comparison to the method according to the invention. In some other embodiments of the invention a thermal activate-able layer may be used which is activated solely by the already present processing temperature of the plastic sheet 11. Consequently pre-heating may be completely avoided.

Another advantage achieved by means of inline-lamination is a significantly improved in terms of production speed because additional manpower and processing steps for rolling up the produced plastic sheet on storage rolls or cutting the produced plastic sheet in panels (e.g. of a length of a view meters according to demand and field of application), which are then intermediately stored before final lamination takes place, can be completely avoided. Also the overall production speed is significantly increased, because inline-laminating allows lamination of the just produced plastic sheet 11 with the line speed of the plastic sheet production equipment (not shown in Fig. 1). In the present case it would be six meters per minute. In order to allow proper unwinding of the substrate carrier 3 and pre-heating of the thermal activate-able layer the heat sensor 9 and the unwinder 2 are preferably operating dependent on the line speed or the line speed changes.

It can be mentioned that the substrate carrier 3 may comprise a printed, lacquered or have a functional coating in order to embellish it. The plastic sheet 11 may be made of the following materials: polyethylene, polypropylene, polyester or any other plastic based material.

In addition it can be mention that additional guiding rolls may be of advantage in order to improve proper inline lamination. It can be further mentioned that the substrate carrier 3 can be made of any other carrier material that can have a plastic layer applied on it.

Although parameters have been mention in connection with particular values or ranges it is to note that these values of the parameters may vary in dependency on the individual implementation of the present invention. In this context and in terms of values described for the pre-heating it is to mention that pre-heating may be applied to either the plastic sheet 11 or the thermal activate-able layer or may not be applied at all. In case it may be applied the temperature values may also strongly deviate depending on to the particular materials selected and/or line speed settings selected. In case it may not be applied at all various measures for preserving the processing temperature at a maximum desired level may be applied in order to use the processing temperature of the just produced plastic sheet 11 as unique heat source for activating the thermal activate-able layer.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention may be implemented by means of hardware comprising several distinct elements, and/or by means of a suitably programmed processor. In the device enumerating several means, several of these means may be embodied by one and the same item of hardware. The mere fact that certain measures are recited in mutually different dependent claims does not indicate that a combination of these measures cannot be used to advantage.

## Claims

1. A method of producing a laminate (12), the method comprises the following steps:
producing the carrier material (11), and
laminating onto the produced carrier material (11) inline with the production of the carrier material (11) a substrate carrier (3) that comprises on at least one of its surfaces a layer (4) having adhesive properties, such that the adhesive layer (4) is in contact with the carrier material (11) and adheres to the carrier material (11).

2. A method according to claim 1, wherein in the step of producing a carrier material (11) a plastic sheet is produced as the carrier material (11).

3. A method according to claim 2, wherein, after production, the plastic sheet has a processing temperature that is above room temperature and the adhesive layer (4) of the substrate carrier (3) is a thermal activate-able layer that is brought in contact with the plastic sheet.

4. A method according to claim 3, wherein the step of laminating comprises pre-heating of the thermal activate-able layer (4) before bringing the thermal activate-able layer (4) in contact with the surface of the plastic sheet.

5. A method according to claim 4, wherein the step of laminating comprises pre-heating of the plastic sheet on that side of the plastic sheet to which the thermal activate-able layer (4) shall be adhered before bringing the thermal activate-able layer (4) in contact with the plastic sheet.

6. A method according to claim 4 or claim 5, wherein the step of pre-heating is performed by means of hot air blows or infrared irradiation or other known pre-heating methods.

7. A method according to claim 4 or claim 5, wherein the per-heating is performed such that a surface temperature of the heated material is in the range of 50° C to 150° C is achieved.

8. A method according to any of the preceding claims, wherein the material of the substrate carrier (3) comprises one of the following materials or is one of the following materials or is a composite of these materials: paper, board, plastic film, non-woven material, woven material, aluminum foil, glass fibers, basalt fibers, polymeric foams.

9. A method according to any of the preceding claims, wherein the substrate carrier (3) comprises a printing, is lacquered or shows a functional coating.

10. A method according to any of the preceding claims 3 to 9, wherein the thermal activate-able layer (4) is made of a thermoplastic layer or of a lacquer coating.

11. A method according to any of the preceding claims 2 to 10, wherein the plastic sheet is made of one of the following materials: polyethylene, polypropylene, polyester or any other plastic based material.

12. A method according to any of the preceding claims 3 to 11, wherein the step of laminating comprises unwinding the substrate carrier (3) from a reel before activating the thermal activate-able layer (4).

13. A method according to any of the preceding claims, wherein step of laminating comprises pressing the substrate carrier (3) onto the plastic sheet by means of a pressure roll laminating system (1).

14. A method according to any of the preceding claims, wherein the step of laminating is performed at the line speed of the produced plastic sheet.

15. A method according to claim 3, wherein activating of the adhesive properties of the thermal activate-able layer is solely performed by the processing temperature of the plastic sheet.
